# EUROPEAN PATENT APPLICATION

(11) **EP 4 832 423 A1**
(43) Date of publication of application: **28.10.2026**
(21) Application number: 25738554.2
(22) Date of filing: 10.01.2025
(51) Int. Cl.: H04L 12/18

(54) **METHOD AND APPARATUS FOR CONTROLLING COMMUNICATION PERMISSION IN CONFERENCE**

(30) Priority: 11.01.2024 CN 202410044042; 08.02.2024 CN 202410178057
(71) Applicant: Huawei Cloud Computing Technologies Co., Ltd., Guiyang, Guizhou 550025 (CN)
(72) Inventor: LIAO, Tao, Guiyang, Guizhou 550025 (CN); QI, Guoning, Guiyang, Guizhou 550025 (CN); FAN, Wentao, Guiyang, Guizhou 550025 (CN)
(74) Representative: Huawei European IPR
(86) International application number: PCT/CN2025/071720
(87) International publication number: WO 2025/149027

(57) **Abstract**

This application provides a method for a communication permission control in conferences. The method includes: obtaining a permission matching rule configured by an administrator, where the permission matching rule includes communication rules between a plurality of permission types; sending, to a target user in response to an obtaining request of the target user, a target permission type corresponding to the target user, where the conference joined by the target user further includes at least one attendee; obtaining target media data sent by a target terminal corresponding to the target user, where the media data carries the target permission type; and determining, based on the target permission type, permission types corresponding to the at least one attendee, and the permission matching rule, whether to send the target media data to the at least one attendee, where each attendee corresponds to one permission type. By leveraging the permission matching rule, the method effectively improves the convenience and flexibility of communication permission management in conferences.

## Description

This application claims priorities to Chinese Patent Application No. 202410044042.9, filed on January 11, 2024 and entitled "METHOD AND APPARATUS FOR COMMUNICATION PERMISSION CONTROL IN CONFERENCE", and to Chinese Patent Application No. 202410178057.4, filed with the China National Intellectual Property Administration on February 8, 2024 and entitled "METHOD AND APPARATUS FOR COMMUNICATION PERMISSION CONTROL IN CONFERENCE", both of which are incorporated herein by reference in their entireties.

### TECHNICAL FIELD

This application relates to the conferencing field, and in particular, to a method and an apparatus for communication permission control in a conference.

### BACKGROUND

For information security reasons, many enterprises impose strict rules on sharing of internal materials. A conference system, as one of the most commonly used systems in enterprises, must also comply with these rules. For example, an enterprise may prohibit content sharing between different departments or cross different regions. In short, each enterprise has its own unique requirements.

Currently, responses to such requirements are mainly implemented by configuring network devices at the underlying layer of the conference system. Generally, this involves configuring ports of network devices responsible for data exchange. For example, if audio transmission between region A and region B is prohibited, the ports responsible for transmitting audio data in the network device are configured accordingly.

However, relying only on port configuration to control communication permissions in conferences can hardly meet diversified requirements of enterprises.

### SUMMARY

This application provides a method and an apparatus for communication permission control in conferences.

According to a first aspect of this application, a method for communication permission control in a conference is provided. The method includes: obtaining a permission matching rule configured by an administrator in a conference system, where the permission matching rule includes communication rules between a plurality of permission types, and the conference system is configured to hold a target conference; sending, to a target user in response to an obtaining request of the target user, a target permission type corresponding to the target user, where the conference joined by the target user further includes at least one attendee; obtaining target media data sent by a target terminal corresponding to the target user, where the media data carries the target permission type; and determining, based on the target permission type, permission types corresponding to the at least one attendee, and the permission matching rule, whether to send the target media data to the at least one attendee, where each attendee corresponds to one permission type.

According to the method, the administrator only needs to perform setting in the conference system, thereby avoiding additional configuration of a network device management system outside the conference system, and greatly improving convenience of communication permission management in the conference. In addition, according to the method, the administrator is allowed to set a permission type of an attendee based on an actual requirement, and a unit of permission management is no longer limited to a group of people corresponding to a port of the network device, thereby effectively improving flexibility of communication permission management in the conference.

In a possible implementation, the permission type configured by the administrator and one or more of the following permission parameters are obtained: employee ID, region, department, IP address, access network type, and terminal device type; and a correspondence between the permission types configured by the administrator and the permission parameters is recorded.

In a possible implementation, the obtaining request of the target user carries a permission parameter of the target user, and the target permission type corresponding to the target user is determined based on the permission parameter of the target user and the correspondence between the permission types configured by the administrator and the permission parameters; and the target permission type corresponding to the target user is sent to the target user.

In a possible implementation, the media data includes one or more of the following: audio data, video data, shared data, and message data, where the video data indicates data collected by a camera of an attendee terminal, and the shared data indicates data collected by the attendee terminal from a shared desktop.

In a possible implementation, the at least one attendee includes a first attendee. When it is determined that the target media data is not sent to the first attendee, first no-permission indication information is sent to the first attendee, where the first no-permission indication information indicates that the first attendee has no permission to receive the target media data.

For an attendee who has no permission to obtain the target media data, based on the no-permission indication information, receiving different data by attendees of different permission types in a same conference can be achieved.

In a possible implementation, the at least one attendee includes a second attendee. When it is determined that a portion of the target media data is not sent to the second attendee, second no-permission indication information and another portion of the target media data are sent to the second attendee, where the second no-permission indication information indicates that the second attendee has no permission to receive the portion of the target media data.

For an attendee who has no permission to obtain the complete target media data, based on the no-permission indication information, refined management on media data that can be received by the attendees can be achieved in a same conference based on the permission type.

In a possible implementation, the permission matching rule includes the plurality of communication rules, and whether to send the target media data to the at least one attendee is determined based on the permission matching rule, the target permission type, and the permission types corresponding to the at least one attendee in descending order of priorities of the plurality of communication rules in the permission matching rule.

In a possible implementation, the permission types include one or more of the following: a high-security user, a common user, and an external user, where the high-security user and the common user belong to a same enterprise, and the external user does not belong to the enterprise.

In a possible implementation, before obtaining the permission matching rule configured by the administrator, the method further includes: starting the target conference.

A setting operation of the permission matching rule may be performed before the conference starts, or may be performed during the conference. Because the configuration action is simple, the administrator is allowed to flexibly perform the configuration.

In a possible implementation, the method further includes: obtaining an adjustment performed by the administrator on the permission matching rule, and determining, based on an adjusted permission matching rule, the permission types corresponding to the at least one attendee, and the target permission type, whether to send the target media data to the at least one attendee.

During the conference, the administrator may dynamically adjust the permission type of the attendee or update the communication rules between the plurality of permission types based on an actual conference situation, to implement real-time adjustment and application of the permission matching rule.

In a possible implementation, the permission matching rule further includes a target topic in the conference, and the target media data is media data associated with the target topic.

When the permission matching rule is configured, a topic identifier is added, so that a specific topic is associated with the permission matching rule, and finally, the purpose of performing conference permission control by using the topic as a unit is achieved. Based on this, communication permission control in a conference can be implemented more accurately and pertinently.

A second aspect of this application provides an apparatus for communication permission control in a conference. The system includes: a communication module, configured to: obtain a permission matching rule configured by an administrator in a conference system, where the permission matching rule includes communication rules between a plurality of permission types, and the conference system is configured to hold a target conference; send, to a target user in response to an obtaining request of the target user, a target permission type corresponding to the target user, where the conference joined by the target user further includes at least one attendee; and obtain target media data sent by a target terminal corresponding to the target user, where the media data carries the target permission type; and a processing module, configured to determine, based on the target permission type, permission types corresponding to the at least one attendee, and the permission matching rule, whether to send the target media data to the at least one attendee, where each attendee corresponds to one permission type.

In a possible implementation, the communication module is further configured to obtain the permission type configured by the administrator and one or more of the following permission parameters: employee ID, region, department, IP address, access network type, and terminal device type; and the processing module records a correspondence between the permission types configured by the administrator and the permission parameters.

In a possible implementation, the obtaining request of the target user carries a permission parameter of the target user. The processing module is further configured to determine, based on the permission parameter of the target user and the correspondence between the permission types configured by the administrator and the permission parameters, the target permission type corresponding to the target user. The communication module is further configured to send, to the target user, the target permission type corresponding to the target user.

In a possible implementation, the media data includes one or more of the following: audio data, video data, shared data, and message data, where the video data indicates data collected by a camera of an attendee terminal, and the shared data indicates data collected by the attendee terminal from a shared desktop.

In a possible implementation, the at least one attendee includes a first attendee, the processing module is further configured to determine not to send the target media data to the first attendee, and the communication module is further configured to send first no-permission indication information to the first attendee, where the first no-permission indication information indicates that the first attendee has no permission to receive the target media data.

In a possible implementation, the at least one attendee includes a second attendee, the processing module is further configured to determine not to send a portion of the target media data to the second attendee; and the communication module is further configured to send second no-permission indication information and another portion of the target media data to the second attendee, where the second no-permission indication information indicates that the second attendee has no permission to receive the portion of the target media data.

In a possible implementation, the permission matching rule includes the plurality of communication rules, and the processing module is further configured to determine, in descending order of priorities of the plurality of communication rules in the permission matching rule based on the permission matching rule, the target permission type, and the permission types corresponding to the at least one attendee, whether to send the target media data to the at least one attendee.

In a possible implementation, the permission types include one or more of the following: a high-security user, a common user, and an external user, where the high-security user and the common user belong to a same enterprise, and the external user does not belong to the enterprise.

In a possible implementation, the processing module is further configured to start the target conference before the permission matching rule configured by the administrator is obtained.

In a possible implementation, the permission matching rule further includes a target topic in the conference, and the target media data is media data associated with the target topic.

According to a third aspect of this application, a compute device cluster is provided, including at least one compute device. Each compute device includes a processor and a memory, and the processor in the at least one compute device is configured to execute instructions stored in the memory in the at least one compute device, so that the compute device performs the method provided in any one of the first aspect or the possible designs of the first aspect.

According to a fourth aspect of this application, a computer program product including instructions is provided, where when the instructions are run by a computer device cluster, the computer device cluster is enabled to perform the method provided in any one of the first aspect or the possible designs of the first aspect.

According to a fifth aspect of this application, a computer-readable storage medium is provided, including computer program instructions. When the computer program instructions are executed by a compute device cluster, the compute device cluster performs the method provided in any one of the first aspect or the possible designs of the first aspect.

### BRIEF DESCRIPTION OF DRAWINGS

To describe technical methods in embodiments of this application more clearly, the following briefly describes accompanying drawings for describing embodiments.
FIG. 1 is a diagram of an architecture of an internal conference system of an enterprise according to an embodiment of this application;
FIG. 2 is a diagram of an architecture of a conference system according to an embodiment of this application;
FIG. 3A and FIG. 3B are a schematic flowchart of a method for communication permission control according to an embodiment of this application;
FIG. 4 is a configuration interface according to an embodiment of this application;
FIG. 5 is another configuration interface according to an embodiment of this application;
FIG. 6 is still another configuration interface according to an embodiment of this application;
FIG. 7 is a diagram of a structure of an apparatus for communication permission control according to an embodiment of this application;
FIG. 8 is a diagram of a structure of a compute device according to an embodiment of this application;
FIG. 9 is a diagram of a structure of a compute device cluster according to an embodiment of this application; and
FIG. 10 is a diagram of a structure of another compute device cluster according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely used to explain specific embodiments of this application, but are not intended to limit this application.

Instant messaging (Instant Messaging, IM): Instant messaging is commonly used in a real-time communication system, and the system allows two or more users to instantly transfer text messages, files, voice, and videos over a network.

Media data: The media data is video data, shared data, audio data, message data, and the like sent by an attendee terminal during a conference.

Video data: The video data is data collected by a camera of an attendee terminal and sent by the attendee terminal, for example, an image of an attendee terminal user and a surrounding environment of a conference site.

Shared data: The shared data is data that is collected from a shared desktop of an attendee terminal and sent by the attendee terminal. Specifically, the shared data may be desktop data of all or part of a region of the attendee terminal, or may be displayed content of an application running on the attendee terminal.

Audio data: The audio data is sound data sent by an attendee terminal, for example, a sound made by an attendee terminal user or a sound of a video played by the attendee terminal user.

Message data: The message data is a text message sent by an attendee terminal, for example, text communication content in a chat window of an attendee terminal user.

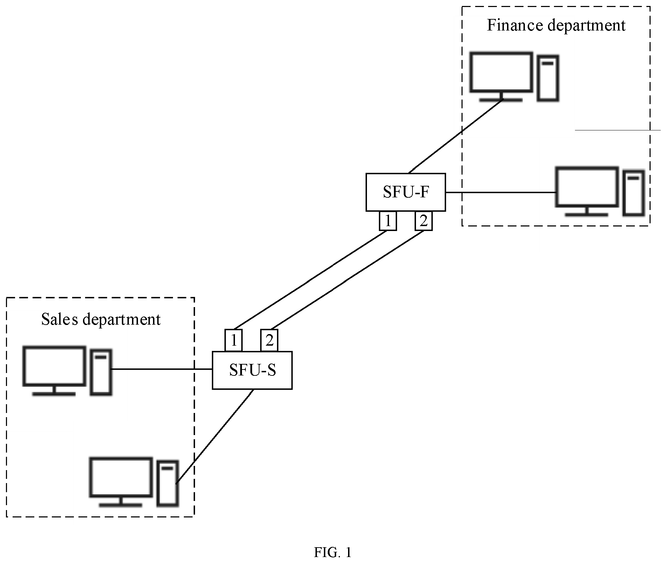

FIG. 1 shows an architecture of an internal conference system of an enterprise. FIG. 1 shows an example of two departments: a sales department and a finance department. In a conference, there are a plurality of employees from the sales department and a plurality of employees from the finance department. Each employee is connected to a selective forwarding unit (Selective Forwarding Unit, SFU) through a terminal (for example, a personal computer (personal computer, PC)), and then joins the conference through a data communication link established between SFUs corresponding to the two departments. Specifically, different data communication links are further established between the two SFUs based on data types, and two ends of each communication link are ports of the SFUs dedicated to transmitting this type of data. For example, two ends of a communication link 1 specially used to transmit video data are respectively a port SFU-S-1 and a port SFU-F-1, and two ends of a communication link 2 specially used to transmit shared data are respectively a port SFU-S-2 and a port SFU-F-2.

Usually, most of information processed on a desktop of an employee from the finance department is information that requires internal confidentiality, for example, salary information, company fund usage information, or accounting information. Therefore, the enterprise may require that shared data on the desktop of the finance department cannot be shared with other departments (including the sales department). To achieve this objective, the SFU on the finance department side may be configured, to be specific, it is specified that the port SFU-F-2 can only receive shared data, but cannot send shared data. In this way, during the conference, when an employee form the sales department shares a desktop, an employee attendee from the finance department can view the desktop; however, when an employee from the finance department shares a desktop, an employee attendee from the sales department cannot view the desktop. It should be noted that, in this case, other attendee employees from the finance department can view the shared desktop because colleagues from the finance department may transmit data through another port.

It should be understood that, by setting the ports of the SFUs, not only unidirectional control of data transmission but also bidirectional control can be implemented as required. To be specific, in the foregoing example, the finance department cannot view the shared desktop of the sales department. In other words, the communication link used to transmit shared data between SFUs corresponding to the two departments is disabled, but this does not affect participation of employees from the two departments in a same conference.

It can be learned from the foregoing example that, by setting a port of a network device (for example, the SFU), a simple information security requirement of an enterprise can be met to some extent. However, this method cannot meet complex and diversified information security requirements. For example, the enterprise stipulates that a common employee from the sales department cannot receive shared data from the finance department, but a high-level employee (for example, a director) from the sales department has permission to receive the shared data from the finance department. In this case, only a new port or even a new network device may be extended for the high-level employee to meet this requirement. In this way, for the enterprise, reconstruction costs and reconstruction difficulty of the network device are significantly increased. In addition, although the network device is underlying hardware of the conference system, if the network device (for example, the SFU) needs to be reconstructed or configured, the configuration needs to be performed outside the conference system. This also brings more workloads to an information technology IT staff of the enterprise. Finally, because a management system of the network device is usually independent of the conference system, when a new rule needs to be delivered, the IT staff needs to be notified first, and then the IT staff uses the management system of the network device to manage and set the network device. In other words, the method cannot flexibly and timely manage and set the network device, and therefore cannot flexibly meet the information security requirements of the enterprise.

In view of this, this application provides a method for communication permission control in a conference. Specifically, the conference system may receive, at any time, a permission matching rule configured by an administrator of the enterprise. During the conference, a conference management server and a media server implement communication permission control between a plurality of users according to the permission matching rule. The permission matching rule includes communication permission between attendee roles. According to the method, the communication permission control can be implemented by the conference system without setting or reconstructing a port of the network device, thereby greatly improving efficiency and flexibility of communication permission control.

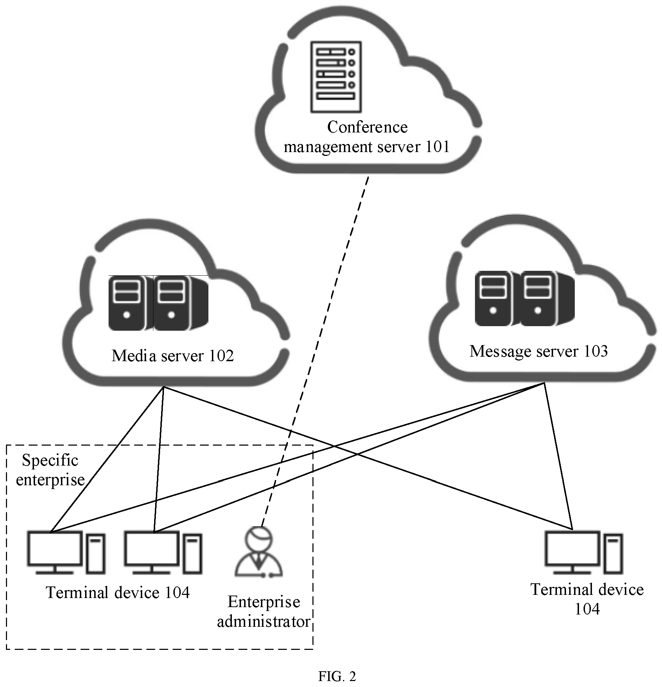

FIG. 2 shows an architecture of a conference system according to this application. Generally, a conference system 100 includes a conference management server 101, a media server 102, and a terminal device 104. In some possible cases, the conference system 100 further includes a message server 103.

The conference management server 101 is configured to receive a permission matching rule configured by an enterprise administrator, and is further configured to deliver a part or all of the permission matching rule to the media server 102 and the message server 103, so that the media server 102 and the message server 103 forward received media data according to the received permission matching rule. The conference management server 101 may be an independent physical server, or may be a physical server cluster. Certainly, a function of the conference management server 101 may alternatively be implemented by using a virtualization technology through a virtualization instance (for example, a virtual machine or a container), or may be implemented through a virtualization instance cluster. In some possible implementations, the conference management server 101 further provides a configuration interface, used to receive the permission matching rule configured by the enterprise administrator. The configuration interface is described in detail below.

In addition to obtaining the part or all of the permission matching rule, the media server 102 is further configured to establish a media data channel between terminal devices, to forward media data between the terminal devices. The forwarding operation is performed according to the permission matching rule. It should be noted that the media server 102 may be an SFU, or may be a multipoint control unit (Multipoint Control Unit, MCU). It should be understood that an implementation of the media server 102 is not limited in this application. Corresponding to existence of the media server 102, the conference management server 101 provides a display window for displaying video data and/or shared data of a terminal user.

In addition to obtaining the part or all of the permission matching rule, the message server 103 is further configured to establish a message data channel between terminal devices, to forward message data between the terminal devices. The forwarding operation is performed according to the permission matching rule. Corresponding to existence of the message server 103, the conference management server 101 provides a chat window for displaying message data of a terminal user.

It should be noted that, in some possible scenarios, the media server 102 may be configured to process various types of media data. Therefore, the message server 103 is optional. However, in some possible scenarios, the message server 103 specially configured to process message data exists. In this scenario, the media server 102 is configured to process media data other than the message data, and the message server 103 is specially configured to process the message data. Names or a quantity of servers for processing media data is not limited in this application. That is, for media data such as video data, shared data, audio data, and message data, dedicated servers may be separately used to transmit data. For example, the following uses an example in which the media server 102 is configured to process first three types of data, and the message server 103 is configured to process the message data.

The terminal device 104 is a multimedia device configured to join a conference, for example, a mobile phone, a computer, or a tablet computer. In some possible implementations, the terminal device 104 may alternatively be a virtual terminal provided based on a cloud phone service or a cloud desktop service. The terminal user joins the conference using the terminal device 104 and a login credential, and implements functions such as viewing, speaking, chatting, video, and sharing. Corresponding to existence of the terminal device 104, the conference management server 101 provides a login interface, to obtain and verify the login credential of the user.

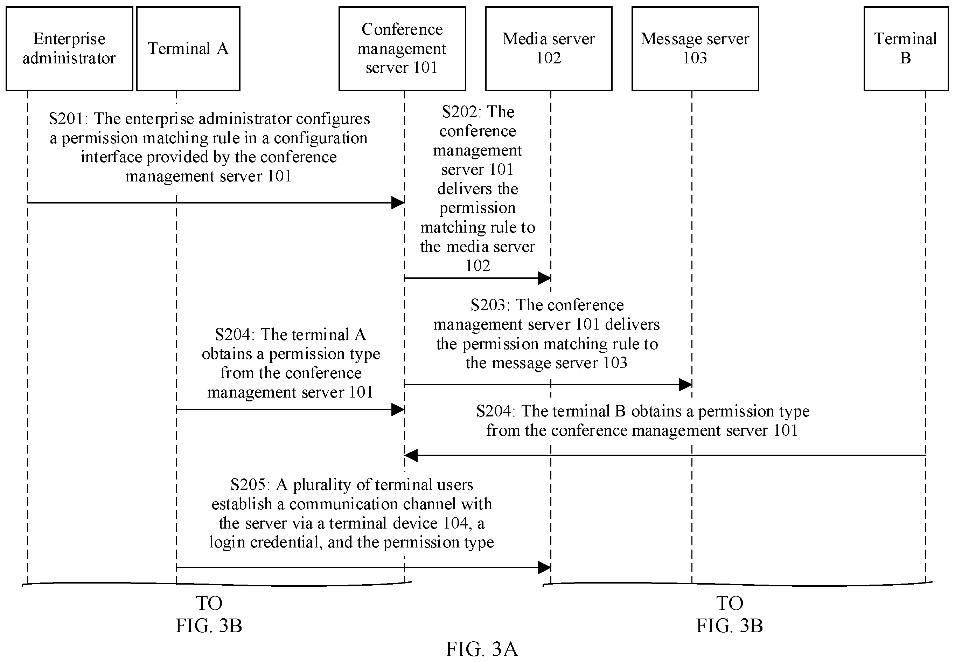

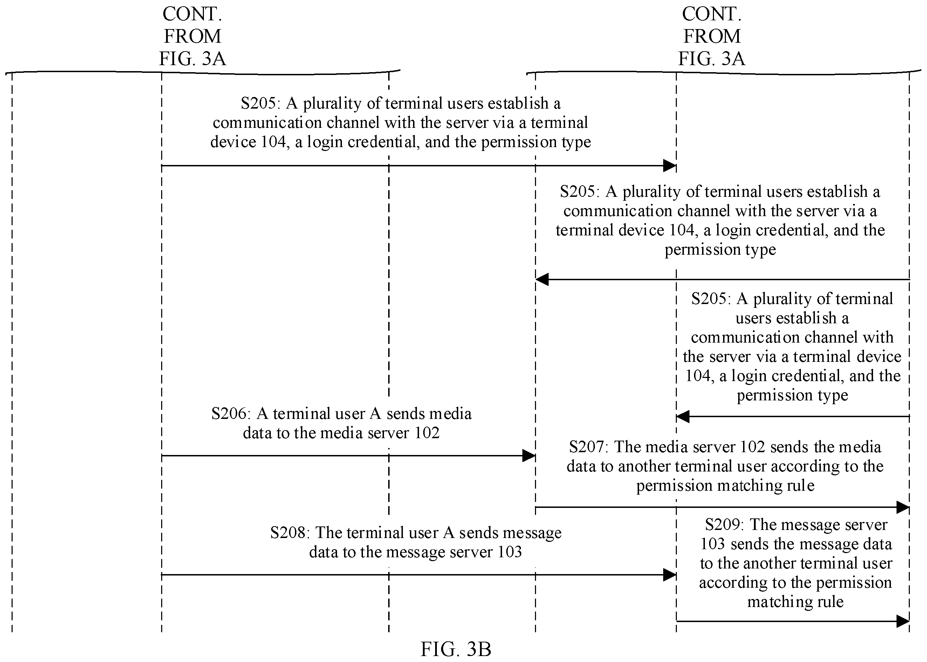

The following describes a method 200 for communication permission control provided in this application with reference to FIG. 3A and FIG. 3B.

S201: An enterprise administrator configures a permission matching rule in a configuration interface provided by a conference management server 101.

The permission matching rule indicates communication rules between different permission types. Before the permission matching rule is described, the permission type is first described.

From the perspective of mapping, each user corresponds to one permission type, and a correspondence between the user and the permission type may be configured by the enterprise administrator.

In terms of type classification, the permission type may be simply classified into a high-level user and a common user. Correspondingly, the permission matching rule should include communication rules between high-level user permission and low-level user permission. In a possible implementation, the permission types may be classified into a high-security user, a common user, and an external user. Correspondingly, the permission matching rule should include communication rules between the high-security user, the common user, and the external user. It should be understood that a quantity of classification levels and naming of the permission type are not limited in this application. In other words, the enterprise administrator may set more permission types with more classification levels based on a requirement. It should be understood that, regardless of a quantity of the permission types, a key point is that permission types at different levels have different settings in the communication rules.

From the perspective of parameter configuration, the permission type can be configured based on enterprise requirements. For example, configuration may be performed in a unit of one or more of the following parameters: a user, a department, a region, an access network type, an internet protocol address (Internet Protocol Address, IP Address), a terminal device type, and the like.

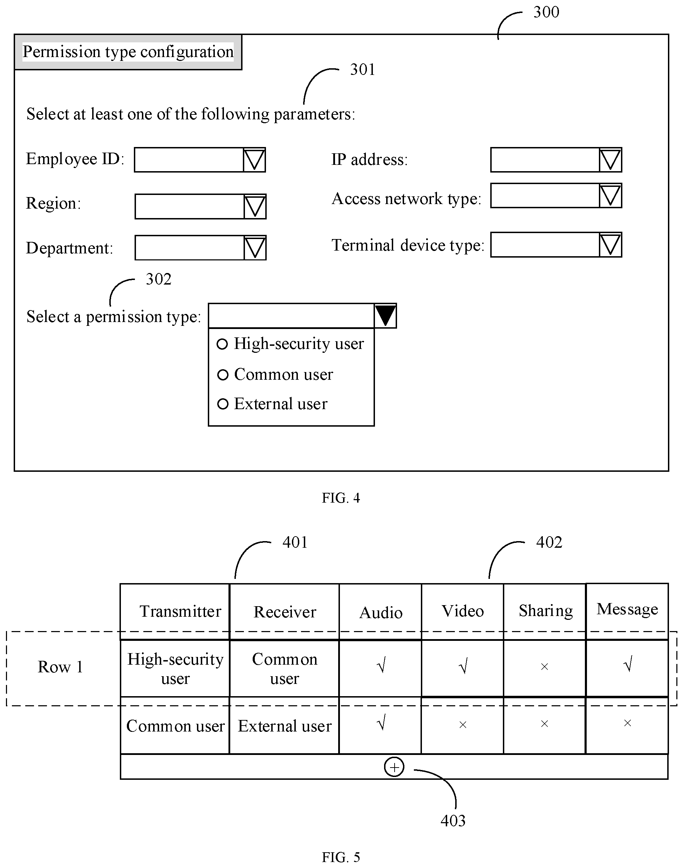

For example, FIG. 4 is a diagram of a configuration interface 300. The configuration interface 300 includes a parameter selection control 301 and a permission type selection control 302.

The enterprise administrator may select one or more parameters for setting via the parameter selection control 301 based on a requirement. A drop-down list is provided for each parameter for the enterprise administrator to select. Optionally, the enterprise administrator may alternatively directly enter a parameter in a text box, to implement search or direct input. Specifically, an employee ID is used to identify an identity of an employee. Generally, an employee ID of each employee is unique. The enterprise administrator may configure a permission type for a specific employee by setting this parameter. A region may be a country, a city, a region, or an administrative division where the enterprise operates. The enterprise administrator may configure a permission type for an attendee in a specific region by setting this parameter. An IP address may include a plurality of IP addresses and a plurality of IP address segments. The enterprise administrator may configure a permission type for an attendee whose access point is a specific IP address or IP address segment by setting this parameter. An access network type includes an enterprise internal network and an external network. The enterprise may configure a permission type for an attendee whose access point is located in the enterprise internal network or the external network by setting this parameter. A terminal device type includes a mobile phone, a PC, a tablet, and the like. The enterprise administrator may configure, by setting this parameter, permission types for attendees whose access terminal devices are a mobile phone, a PC, a tablet, and the like. After the foregoing parameters are set, a permission type may be configured for an attendee that meets the foregoing parameters. As shown in the permission type selection control 302, the enterprise administrator may select one of a plurality of options from a drop-down list for configuration.

As described above, the permission matching rule indicates communication rules between different permission types. The enterprise administrator may set the permission matching rule in the configuration interface, or may upload a file or a script that carries the permission matching rule to the conference management server 101, to complete configuration.

For example, FIG. 5 shows a diagram of a configuration interface 400. The configuration interface 400 includes a permission type configuration control 401, a communication rule configuration control 402, and an item addition control 403.

The permission type configuration control 401 includes a transmitter and a receiver. The enterprise administrator can set the transmitter and the receiver as required. For example, the communication rule configuration control 402 shows four parameters: audio, video, sharing, and message, which respectively correspond to audio data, video data, shared data, and message data. The enterprise administrator may select Allow (√) or Disallow (×) for the preceding four parameters as required.

According to the permission matching rule shown in a first row, when a permission type of the transmitter is a high-security user and a permission type of the receiver is a common user, the common user can receive audio data, video data, and message data from the high-security user in the conference, but cannot receive shared data from the high-security user. This may be because a desktop of the high-security user usually displays some confidential content or content that is not convenient to display to an attendee whose permission type is a common user.

In some possible implementations, when the enterprise administrator adds a row of rules via the item addition control 403, the enterprise administrator may further select from "unidirectional" and "bidirectional" (not shown in the figure). Optionally, "unidirectional" is used as a default option, and the enterprise administrator may select "bidirectional" as required. "Unidirectional" indicates that setting of this rule applies to only a case in which the "transmitter" sends media data to the "receiver" in a conference, while "bidirectional" indicates that setting of this rule applies to both the case in which the "transmitter" sends media data to the "receiver" in a conference and a case in which the "receiver" sends media data to the "transmitter" in a conference. For example, the first row is used as an example. When a user selects "bidirectional" during setting, a rule is generated synchronously: When a permission type of the transmitter is a common user, and a permission type of the receiver is a high-security user, the high-security user can receive audio data, video data, and message data from the common user in the conference, but cannot receive shared data from the common user. This setting can effectively improve configuration efficiency of the enterprise administrator.

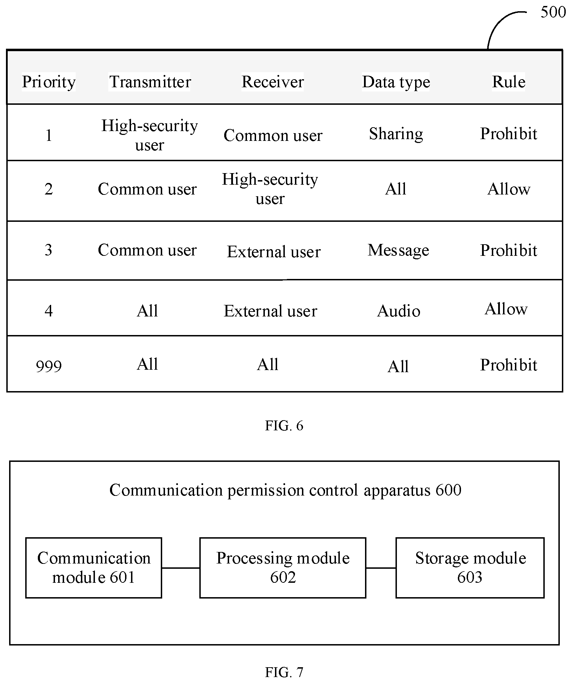

For example, FIG. 6 further shows a diagram of a configuration interface 500. The permission matching rule shown in the configuration interface 500 includes a priority parameter, a transmitter, a receiver, a data type, and a rule. Types of the transmitter and the receiver both include: a high-security user, a common user, an external user, and all. "All" indicates that at least first three types are included. Optionally, "all" may further include any permission type, for example, a newly added permission type. The data type includes audio, video, sharing, and message, which respectively correspond to audio data, video data, shared data, and message data. The rule has two options: "allow" and "prohibit". It should be noted that for a priority, a smaller number corresponding to a priority indicates a higher priority of the rule. When the server needs to determine, according to the permission matching rule, whether to allow data communication, the server performs checking one by one in descending order of priorities. For example, there are attendees whose permission types are a high-security user, a common user, and an external user in a conference. When a common user attempts to send message data to a chat window of the conference, the server first performs comparison according to a rule with a priority of 1. When it is determined that a transmitter of the rule is not a "high-security user", it is considered that the matching fails, and comparison is performed according to a rule with a priority of 2. When it is determined that the second rule allows an attendee whose permission type is a common user to send all types of data (such as audio data, video data, shared data, and message data) to an attendee whose permission type is a high-security user, the message data is sent to the attendee of the high-security user according to the rule with the priority of 2. Next, comparison is performed according to a rule with a priority of 3. According to the rule, an attendee whose permission type is a common user is prohibited from sending message data to an attendee whose permission type is an external user. Therefore, the server does not send the message data to the attendee whose permission type is the external user. When data transmission rules have been determined for permission types of all attendees, the server will no longer perform further comparisons.

In some possible implementations, the server may provide a default catch-all rule. When an attendee of a specific permission type attempts to send specific type of data to an attendee of another permission type, if none of the rules set by the enterprise administrator can match the case, the server performs matching according to the catch-all rule, and a matching result is that transmission of this type of data is prohibited. Optionally, the enterprise administrator may select, delete, and modify the fallback rule as required.

Similar to the rules shown in configuration interfaces in FIG. 4 and FIG. 5, the enterprise administrator may perform operations such as adding, deleting, and modifying the rules as required.

It should be noted that, occurrence time of a configuration operation of the permission type may be earlier than occurrence time of setting the permission matching rule, or may be later than the occurrence time of setting the permission matching rule. In addition, occurrence time of the two types of operations may be preset before the conference starts, or may be set during the conference.

S202: The conference management server 101 delivers the permission matching rule to the media server 102.

After the enterprise administrator configures the permission matching rule, the conference management server 101 delivers the complete or partial permission matching rule to the media server 102.

Optionally, the partial permission matching rule refers to a rule that is related to only the media server 102. When the media server 102 is configured to process media data other than the message data, the media server 102 receives a permission matching rule for data types of video, sharing, audio, and all.

S203: The conference management server 101 delivers the permission matching rule to the message server 103.

After the enterprise administrator configures the permission matching rule, the conference management server 101 delivers the complete or partial permission matching rule to the message server 103.

Optionally, the partial permission matching rule refers to a rule that is related to only the message server 103. When the message server 103 is configured to process only the message data, the media server 102 receives a permission matching rule for data types of message and all.

S204: A plurality of terminals obtain respective permission types from the conference management server 101.

A terminal user A is used as an example. When the terminal user A attempts to use a terminal device to participate in the conference, the terminal device needs to first obtain a permission type corresponding to the terminal user A from the conference management server 101. The attempt to use the terminal device to participate in the conference may be an action of starting or logging in to a conference application by the user, or an action of entering an account and a password by the user and then tapping to confirm.

In some possible implementations, the terminal device may obtain the permission type corresponding to the terminal device without awareness of the user. For example, the terminal user A is an employee of the enterprise. When the employee attempts to join the conference, the terminal device corresponding to the terminal user A is to send one or more of the following parameters to the conference management server 101: employee ID, terminal device type, region to which the employee belongs, department to which the employee belongs, IP address of an access point, access network type of the terminal device, and terminal device type. Corresponding to the permission type configuration interface 300, the conference management server 101 determines a permission type of the terminal user A based on a correspondence between the parameter that is set by the enterprise administrator and the permission type, and further returns the permission type to the terminal device.

In some possible implementations, when the terminal device attempts to use the terminal device to participate in the conference, the conference management server 101 may send the permission matching rule to the terminal device, and the terminal device determines the corresponding permission type according to the permission matching rule.

In some possible implementations, when the terminal user A participates in a conference last time, the terminal device stores a permission type used when the terminal user A participates in the conference last time. Therefore, the parameters that the terminal device corresponding to the terminal user A is to send to the conference management server 101 may further carry a permission type corresponding to the user last time. In this implementation, the terminal device may receive, from the conference management server 101, the permission type or a response message indicating that the permission type remains unchanged.

S205: A plurality of terminal users establish a communication channel with the server via a terminal device 104, a login credential, and the permission type.

After obtaining the permission type corresponding to the terminal user A in S204, the terminal user A may join the conference via the terminal device 104, the login credential, and the permission type. The login credential includes but is not limited to a conference link, an account and a password, facial recognition information, fingerprint recognition information, and the like.

After confirming that the terminal device joins the conference, the conference management server 101 indicates the terminal device to establish a communication connection to the server. For example, the terminal device establishes a communication connection to the media server and the message server. For example, the terminal device establishes a communication connection to the media server. The conference management server 101 sends, to the terminal device, an instruction that instructs the terminal device to establish the communication connection to the media server, where the instruction carries an address (for example, an IP address) of the media server 102. The terminal device sends, to the media server 102, a communication channel establishment request that carries the permission type of the terminal device. In response to the communication channel establishment request, the media server 102 establishes a communication channel with the terminal device. Because establishing a communication channel between two devices belongs to the conventional technology, details are not described in this application. It should be noted that, when the communication channel is established, the media server 102 further marks the terminal device based on the permission type carried in the communication channel establishment request. For establishment of the communication channel between the terminal device and the message server 103, refer to the foregoing content.

S206: The terminal user A sends media data to the media server 102.

After the terminal device corresponding to the terminal user A establishes a communication channel with the media server 102, the terminal user A can participate in the conference, and the terminal device can receive and send data.

The following uses an example in which there are three attendees: a terminal user A, a terminal user B, and a terminal user C. When the terminal user A attempts to share a document on a desktop of the terminal user A in the conference and explain the document, media data sent from the terminal device corresponding to the terminal user A to the media server 102 in an uplink manner may include video data, audio data, and shared data. The video data is mainly used to display a personal image of the terminal user A, the audio data includes data explained by the terminal user A, and the shared data includes data corresponding to the document on the desktop of the terminal user A.

S207: The media server 102 sends the media data to another terminal user according to the permission matching rule.

After receiving the media data including the video data, the audio data, and the shared data, the media server 102 determines, according to the permission matching rule, whether to send a part or all of the media data to the another terminal user.

It is assumed that the permission type corresponding to the terminal user A is a common user, a permission type corresponding to the terminal user B is a high-security user, and a permission type corresponding to the terminal user C is an external user. The permission matching rule shown in FIG. 6 is used as an example. First, determining is performed according to a matching rule with a priority of 1. When it is determined that a transmitter (a high-security user) in the rule is inconsistent with an actual transmitter (a common user), determining is sequentially performed according to a matching rule with a priority of 2. According to the matching rule, the terminal user A may send media data of any type to the terminal user B. Therefore, the media server 102 sends all media data received from the terminal user A to the terminal user B. Then, determining is performed according to a matching rule with a priority of 3. Although the transmitter and the receiver in the matching rule with the priority of 3 are consistent with the actual situation in this example, the matching cannot be performed because the data type is limited to the message data. Therefore, next, determining is performed according to a matching rule with a priority of 4. According to the matching rule, the terminal user A may send audio data to the terminal user C. Therefore, the media server 102 sends the received audio data from the terminal user A to the terminal user C. In this case, whether video data and shared data of the terminal user A can be sent to the terminal user C is not clear. Therefore, finally, determining is performed according to a catch-all rule with the lowest priority. According to the catch-all rule, the video data and the shared data of the terminal user A are prohibited from sending to the terminal user C. In this way, the media server 102 sends the media data from the terminal user A to the another terminal user according to the permission matching rule.

In a possible implementation, for the audio data, the shared data, and the video data that are not allowed to be transmitted, a prompt is displayed at the receiver, for example, words "content without permission" are displayed. Therefore, according to the foregoing example, a terminal device corresponding to the terminal user C displays "content without permission" to prompt the terminal user C that the terminal user C has no permission to receive the audio data, the video data, and the shared data sent by the terminal user A.

S208: The terminal user A sends message data to the message server 103.

In a possible implementation, in addition to sharing a document on the desktop of the terminal user A and explaining the document at the conference, the terminal user A further sends a text message in a chat window, for example, a storage address of the document shared by the terminal user A, so that the attendees can view the document by themselves. That is, the terminal user A further sends the message data to the message server 103.

S209: The message server 103 sends the message data to the another terminal user according to the permission matching rule.

After receiving the message data, the message server 103 determines, according to the permission matching rule, whether to send the message data to the another terminal user.

The permission matching rule shown in FIG. 6 is still used as an example. According to a matching method similar to that in S207, it may be determined that the terminal user B can view the message sent by the terminal user A, but the terminal user C cannot view the message sent by the terminal user A.

In a possible implementation, for the message data that is prohibited from being transmitted, a prompt is displayed at the receiver, for example, words "content without permission" are displayed. Therefore, according to the foregoing example, the terminal device corresponding to the terminal user C displays "content without permission" to prompt the terminal user C that the terminal user C has no permission to receive the message data sent by the terminal user A.

As described above, as a server dedicated to processing message data, the message server 103 is not necessary. Therefore, the foregoing steps S203, S208, and S209 are also optional.

It should be noted that the foregoing method procedure may not only be applied to the entire conference, but also may be applied to one or more specific topics in the conference. Specifically, when the permission matching rule is configured, an identifier of a topic may be added, so that a specific topic is associated with the permission matching rule, to eventually implement conference permission control in a unit of a topic. Based on this, communication permission control in a conference can be implemented more accurately and pertinently.

In summary, this application provides a method for communication permission control in a conference. After obtaining the permission matching rule configured by the enterprise administrator, the conference management server 101 delivers the rule to the media server 102 and the message server 103. In addition, before the terminal device enters the conference, the permission type corresponding to the terminal device is sent to the terminal device, so that the terminal device establishes a communication connection to the media server 102 and the message server 103 based on the permission type. After receiving the media data sent by the terminal device, the media server 102 and the message server 103 may determine, according to the permission matching rule, whether to forward the media data to another terminal device, thereby implementing communication permission control in the conference.

According to the method, the enterprise administrator only needs to perform setting in a conference system, thereby avoiding additional configuration of a network device management system outside the conference system, and greatly improving convenience of communication permission management in the conference. In addition, according to the method, the enterprise administrator is allowed to perform setting as required, and a unit of permission management is no longer limited to a group of people corresponding to the port of the network device, thereby effectively improving flexibility of communication permission management in the conference.

This application further provides an apparatus 600 for communication permission control. As shown in FIG. 7, the apparatus includes the following.

A communication module 601 is configured to obtain, in step S201, a permission matching rule configured by an enterprise administrator in a configuration interface provided by a conference management server 101, and is further configured to: obtain, in step S204, an obtaining request sent by at least one terminal; and send, to the at least one terminal based on the obtaining request, a response message carrying a permission type. In step S205, the communication module 601 is configured to receive a login credential and a permission type of a terminal user. Further, the communication module 601 is further configured to obtain, in step S206, media data sent by the terminal user, where the media data includes one or more of the following: audio data, video data, shared data, and message data. After receiving the media data sent by the terminal user, the communication module 601 is further configured to send the media data to another terminal user in S207.

A processing module 602 is configured to establish a communication channel with a terminal device in step S205 based on the login credential and the permission type of the terminal user. After obtaining, in step S206, the media data sent by the terminal device, the processing module 602 is configured to determine, according to the permission matching rule, some specific users to whom the media data is to be sent and some specific users to whom no-permission indication information is to be sent. Optionally, for the user to whom the media data is to be sent, it is further necessary to determine whether to send complete media data or partial media data to the user, and this is determined according to the permission matching rule.

A storage module 603 is configured to store the permission matching rule configured by the enterprise administrator in step S201. Specifically, the permission matching rule further includes a correspondence between a permission type configured by the administrator and a permission parameter. In a possible implementation, to implement a function of sending a no-permission indication message to the user in step S207, the storage module 603 is further configured to store the no-permission indication message.

The communication module 601, the processing module 602, and the storage module 603 may all be implemented via software, or may be implemented via hardware. For example, the following uses the communication module 601 as an example to describe an implementation of the communication module 601. Similarly, for implementations of the processing module 602 and the storage module 603, refer to the implementation of the communication module 601.

The module is used as an example of a software functional unit, and the communication module 601 may include code run on a computing instance. The computing instance may include at least one of a physical host (compute device), a virtual machine, and a container. Further, there may be one or more computing instances. For example, the communication module 601 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The module is used as an example of a hardware functional unit, and the communication module 601 may include at least one compute device, for example, a server. Alternatively, the communication module 601 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The plurality of compute devices included in the communication module 601 may be distributed in a same region, or may be distributed in different regions. The plurality of compute devices included in the communication module 601 may be distributed in a same AZ, or may be distributed in different AZs. Similarly, the plurality of compute devices included in the communication module 601 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the communication module 601 may be configured to perform any step in the method 200 for communication permission control, the processing module 602 may be configured to perform any step in the method 200 for communication permission control, and the storage module 603 may be configured to perform any step in the method 200 for communication permission control. Steps implemented by the communication module 601, the processing module 602, and the storage module 603 may be specified as required. The communication module 601, the processing module 602, and the storage module 603 separately implement different steps in the method 200 for communication permission control, to implement all functions of the apparatus 600 for communication permission control.

In conclusion, the apparatus 600 for communication permission control may be a software functional unit, or may be a hardware functional unit, or may be a combination of a software functional unit and a hardware functional unit. For example, the apparatus 600 for communication permission control may be a cloud management platform.

The following describes the cloud management platform.

The cloud management platform provides an access interface (for example, an interface or an application programming interface (Application Programming Interface, API)). A tenant can operate a client to remotely access the access interface to register a cloud account and enter a password on the cloud management platform and log in to the cloud management platform. After the cloud account and the password are successfully authenticated by the cloud management platform, the tenant can further pay on the cloud management platform to select and purchase a virtual machine with a specific specification (a processor, an internal memory, or a disk). After the purchase with payment is successful, the cloud management platform provides a remote login account and password of the purchased virtual machine, and the client can remotely log in to the virtual machine, and install and run an application of the tenant on the virtual machine.

Based on logical functions, the cloud management platform can be divided into a tenant console, a computing management service, a network management service, a storage management service, an authentication service, and an image management service. The user console provides an interface or an API to interact with the tenant. The computing management service is used for managing a bare-metal server and a server running a virtual machine and a container. The network management service is used for managing a network service (for example, a gateway and a firewall). The storage management service is used for managing a storage service (for example, a data bucket service). The authentication service is used for managing the account and the password of the tenant. The image management service is used for managing a virtual machine image.

The cloud management platform further provides a cloud management platform client, configured to: receive a control plane command sent by the cloud management platform, and create a virtual machine on a server according to a control-plane control command, and perform full-service life-cycle management on the virtual machine.

Therefore, the tenant can create, manage, log in to, and operate instances such as virtual machines, containers, and bare-metal servers in the cloud data center through the cloud management platform.

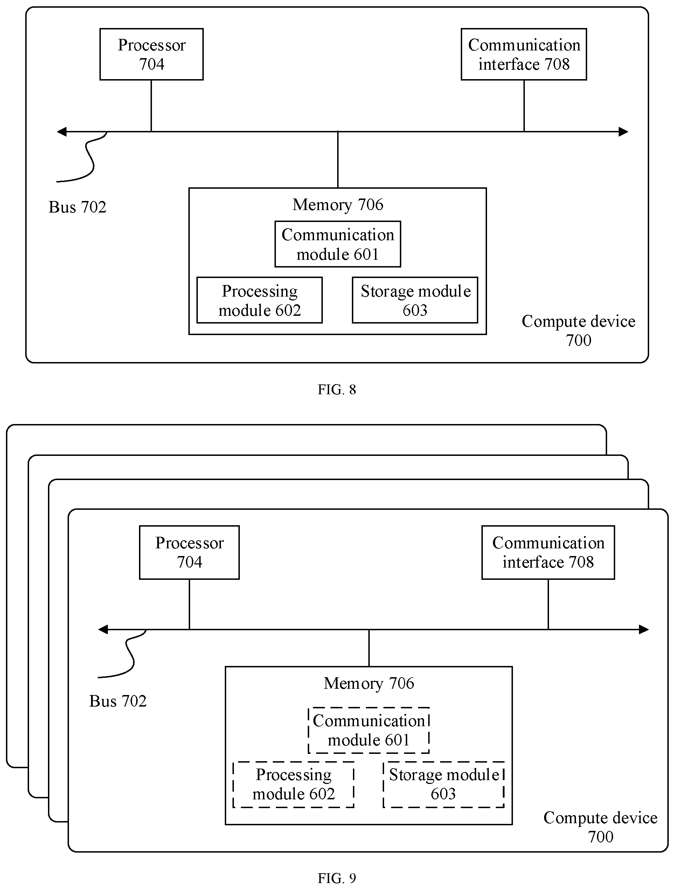

This application further provides a compute device 700. As shown in FIG. 8, the compute device 700 includes a bus 702, a processor 704, a memory 706, and a communication interface 708. The processor 704, the memory 706, and the communication interface 708 communicate with each other through the bus 702. The compute device 700 may be a server or a terminal device. It should be understood that quantities of processors and memories in the compute device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not mean that there is only one bus or only one type of bus. The bus 702 may include a path for information transmission between components (such as the memory 706, the processor 704, and the communication interface 708) of the compute device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid state drive (solid state drive, SSD).

The memory 706 stores executable program code, and the processor 704 executes the executable program code to separately implement functions of the communication module 601, the processing module 602, and the storage module 603, to implement the method 200 for communication permission control. In other words, the memory 706 stores instructions used to perform the method 200 for communication permission control.

The communication interface 703 uses a transceiver module, for example, but not limited to, a network interface card or a transceiver, to implement communication between the compute device 700 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 9, the compute device cluster includes at least one compute device 700. A memory 706 of each of one or more compute devices 700 in the compute device cluster may store same instructions used to perform the method 200 for communication permission control.

In some possible implementations, the memory 706 of each of the one or more compute devices 700 in the compute device cluster may alternatively separately store some instructions used to perform the method 200 for communication permission control. In other words, a combination of the one or more compute devices 700 may jointly execute instructions for performing the method 200 for communication permission control.

It should be noted that memories 706 in different compute devices 700 in the compute device cluster may store different instructions, which are respectively used to perform some functions of the apparatus 600 for communication permission control. In other words, the instructions stored in the memory 706 in different computing devices 700 may implement functions of one or more of the communication module 601, the processing module 602, and the storage module 603.

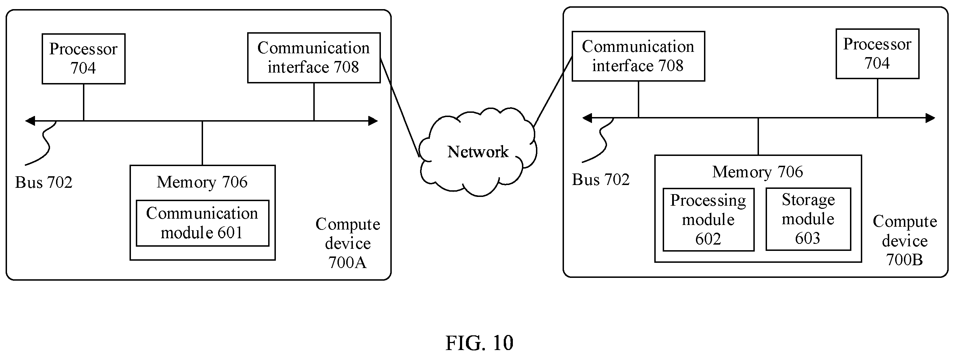

In some possible implementations, the one or more compute devices in the compute device cluster may be connected through a network. The network may be a wide area network, a local area network, or the like. FIG. 10 shows a possible implementation. As shown in FIG. 10, two compute devices 700A and 700B are connected through a network. Specifically, each compute device is connected to the network through a communication interface in the compute device. In this possible implementation, a memory 706 in the compute device 700A stores instructions for executing a function of the communication module 601. In addition, the memory 706 in the compute device 700B stores instructions for performing functions of the processing module 602 and the storage module 603.

A connection manner between the compute device clusters shown in FIG. 10 may be: Functions implemented by the processing module 602 and the storage module 603 are considered to be performed by the compute device 700B in consideration of required frequent interaction of an enterprise administrator and a terminal user according to the method 200 for communication permission control provided in this application.

It should be understood that functions of the compute device 700A shown in FIG. 10 may alternatively be completed by a plurality of compute devices 700. Similarly, functions of the compute device 700B may alternatively be completed by a plurality of compute devices 700.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the method 200 for communication permission control.

Embodiments of this application further provide a computer-readable storage medium. The computer-readable storage medium may be any usable medium accessible by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the method 200 for communication permission control.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A method for communication permission control in a conference, wherein the method comprises:
obtaining a permission matching rule configured by an administrator in a conference system, wherein the permission matching rule comprises communication rules between a plurality of permission types, and the conference system is configured to hold a target conference;
sending, to a target user in response to an obtaining request of the target user, a target permission type corresponding to the target user, wherein the target conference joined by the target user further comprises at least one attendee;
obtaining target media data sent by a target terminal corresponding to the target user, wherein the media data carries the target permission type; and
determining, based on the target permission type, permission types corresponding to the at least one attendee, and the permission matching rule, whether to send the target media data to the at least one attendee, wherein each attendee corresponds to one permission type.

2. The method according to claim 1, wherein obtaining the permission matching rule configured by the administrator comprises:
obtaining the permission types configured by the administrator and one or more of the following permission parameters:
employee ID, region, department, IP address, access network type, and terminal device type; and
recording a correspondence between the permission types configured by the administrator and the permission parameters.

3. The method according to claim 2, wherein the obtaining request of the target user carries a permission parameter of the target user, and sending, to the target user in response to the obtaining request of the target user, the target permission type corresponding to the target user comprises:
determining, based on the permission parameter of the target user and the correspondence between the permission types configured by the administrator and the permission parameters, the target permission type corresponding to the target user; and
sending, to the target user, the target permission type corresponding to the target user.

4. The method according to any one of claims 1 to 3, wherein the media data comprises one or more of the following:
audio data, video data, shared data, and message data, wherein the video data indicates data collected by a camera of an attendee terminal, and the shared data indicates data collected by the attendee terminal from a shared desktop.

5. The method according to any one of claims 1 to 4, wherein the at least one attendee comprises a first attendee, and the method further comprises:
when it is determined not to send the target media data to the first attendee, sending first no-permission indication information to the first attendee, wherein the first no-permission indication information indicates that the first attendee has no permission to receive the target media data.

6. The method according to claim 5, wherein the at least one attendee comprises a second attendee, and the method further comprises:
when it is determined not to send a portion of the target media data to the second attendee, sending second no-permission indication information and another portion of the target media data to the second attendee, wherein the second no-permission indication information indicates that the second attendee has no permission to receive the portion of the target media data.

7. The method according to any one of claims 1 to 6, wherein the permission matching rule comprises the plurality of communication rules, and determining, based on the target permission type, the permission types corresponding to the at least one attendee, and the permission matching rule, whether to send the target media data to the at least one attendee comprises:
determining, in descending order of priorities of the plurality of communication rules in the permission matching rule based on the permission matching rule, the target permission type, and the permission types corresponding to the at least one attendee, whether to send the target media data to the at least one attendee.

8. The method according to any one of claims 1 to 7, wherein the permission types comprise one or more of the following:
a high-security user, a common user, and an external user, wherein the high-security user and the common user belong to a same enterprise, and the external user does not belong to the enterprise.

9. The method according to any one of claims 1 to 8, wherein before obtaining the permission matching rule configured by the administrator, the method further comprises:
starting the target conference.

10. The method according to any one of claims 1 to 9, wherein the permission matching rule further comprises a target topic in the conference, and the target media data is media data associated with the target topic.

11. An apparatus for communication permission control in a conference, comprising:
a communication module, configured to: obtain a permission matching rule configured by an administrator in a conference system, wherein the permission matching rule comprises communication rules between a plurality of permission types, and the conference system is configured to hold a target conference; send, to a target user in response to an obtaining request of the target user, a target permission type corresponding to the target user, wherein the conference joined by the target user further comprises at least one attendee; and obtain target media data sent by a target terminal corresponding to the target user, wherein the media data carries the target permission type; and
a processing module, configured to determine, based on the target permission type, permission types corresponding to the at least one attendee, and the permission matching rule, whether to send the target media data to the at least one attendee, wherein each attendee corresponds to one permission type.

12. The apparatus according to claim 11, wherein the communication module is further configured to obtain the permission type configured by the administrator and one or more of the following permission parameters: employee ID, region, department, IP address, access network type, and terminal device type; and the processing module records a correspondence between the permission types configured by the administrator and the permission parameters.

13. The apparatus according to claim 12, wherein the obtaining request of the target user carries a permission parameter of the target user; the processing module is further configured to determine, based on the permission parameter of the target user and the correspondence between the permission types configured by the administrator and the permission parameters, the target permission type corresponding to the target user; and the communication module is further configured to send, to the target user, the target permission type corresponding to the target user.

14. The apparatus according to any one of claims 11 to 13, wherein the media data comprises one or more of the following: audio data, video data, shared data, and message data, wherein the video data indicates data collected by a camera of an attendee terminal, and the shared data indicates data collected by the attendee terminal from a shared desktop.

15. The apparatus according to any one of claims 11 to 14, wherein the at least one attendee comprises a first attendee; the processing module is further configured to determine not to send the target media data to the first attendee; and the communication module is further configured to send first no-permission indication information to the first attendee, wherein the first no-permission indication information indicates that the first attendee has no permission to receive the target media data.

16. The apparatus according to claim 15, wherein the at least one attendee comprises a second attendee; the processing module is further configured to determine not to send a portion of the target media data to the second attendee; and the communication module is further configured to send second no-permission indication information and another portion of the target media data to the second attendee, wherein the second no-permission indication information indicates that the second attendee has no permission to receive the portion of the target media data.

17. The apparatus according to any one of claims 11 to 16, wherein the permission matching rule comprises the plurality of communication rules, and the processing module is further configured to determine, in descending order of priorities of the plurality of communication rules in the permission matching rule based on the permission matching rule, the target permission type, and the permission types corresponding to the at least one attendee, whether to send the target media data to the at least one attendee.

18. The apparatus according to any one of claims 11 to 17, wherein the permission types comprise one or more of the following: a high-security user, a common user, and an external user, wherein the high-security user and the common user belong to a same enterprise, and the external user does not belong to the enterprise.

19. The apparatus according to any one of claims 11 to 18, wherein the processing module is further configured to start the target conference before the permission matching rule configured by the administrator is obtained.

20. The apparatus according to any one of claims 11 to 19, wherein the permission matching rule further comprises a target topic in the conference, and the target media data is media data associated with the target topic.

21. A compute device cluster, comprising at least one compute device, wherein each compute device comprises a processor and a memory; and
a processor of the at least one compute device is configured to execute instructions stored in a memory of the at least one compute device, to enable the compute device cluster to perform the method according to any one of claims 1 to 9.

22. A computer program product comprising instructions, wherein when the instructions are run by a computer device cluster, the computer device cluster is enabled to perform the method according to any one of claims 1 to 9.

23. A computer-readable storage medium, comprising computer program instructions, wherein when the computer program instructions are executed by a compute device cluster, the compute device cluster performs the method according to any one of claims 1 to 9.
